# EUROPEAN PATENT APPLICATION

(11) **EP 4 575 753 A1**
(43) Date of publication of application: **25.06.2025**
(21) Application number: 23857552.6
(22) Date of filing: 07.07.2023
(51) Int. Cl.: G06F 3/16, G06F 3/0484, G06V 10/25, G10L 19/26, G06V 40/20

(54) **ELECTRONIC DEVICE FOR CONTROLLING AUDIO DEVICE ON BASIS OF IMAGE CONTEXT, AND METHOD FOR OPERATING SAME**

(30) Priority: 22.08.2022 KR 20220104917
(71) Applicant: Samsung Electronics Co., Ltd., Suwon-si, Gyeonggi-do 16677 (KR)
(72) Inventor: OMELCHENKO, Andrii, Suwon-si, Gyeonggi-do 16677 (KR); VDOVYCHENKO, Iegor, Suwon-si, Gyeonggi-do 16677 (KR); MOROZOV, Kostiantyn, Suwon-si, Gyeonggi-do 16677 (KR); ANDROSOV, Vadym, Suwon-si, Gyeonggi-do 16677 (KR); SAVIN, Volodymyr, Suwon-si, Gyeonggi-do 16677 (KR)
(74) Representative: Appleyard Lees IP LLP
(86) International application number: PCT/KR2023/009695
(87) International publication number: WO 2024/043514

(57) **Abstract**

Provided are an electronic device for controlling audio settings of an audio device, based on contextual information of an image, and an operation method thereof. The electronic device may detect at least one object from an image captured using a camera, identify a main object of interest to a user, from among the detected at least one object, obtain context information of the identified main object of interest, and control audio settings of the audio device for obtaining or outputting an audio signal, the audio device including at least one of a microphone and a speaker, based on the obtained context information.

## Description

### Technical Field

The present disclosure relates to an electronic device for controlling an audio device, based on context information obtained from an image captured using a camera, and an operation method thereof.

### Background Art

In general, when a user takes a photo or shoots a video by using a camera, the user selects a main object of interest (hereinafter referred to as an "object of interest") among objects that are to be shot, and adjusts camera settings, such as zooming in, zooming out, or panning, with respect to the selected object of interest to obtain high-quality results. Even when the user adjusts the camera settings, audio settings of an audio device are not changed or adjusted according to objects of interest. For example, even when the user selects a singer singing in a square as the object of interest and zooms in on the singer, a microphone records not only the singer's song, but also the noise of vehicles around the square, the cheers of the audience, or the voices of pedestrians. In order for the user to obtain an audio signal of the object of interest (e.g., the singer's singing sound), the audio settings of the audio device (e.g., the microphone) have to be manually changed or adjusted through a user input. For example, the user can change or adjust equalizer settings in the audio device's settings while shooting a video by using the camera.

### Disclosure of Invention

### Technical Solution

An aspect of the present disclosure provides an electronic device for controlling an audio device, based on an image. The electronic device according to an embodiment of the present disclosure may include a camera, the audio device including at least one of a microphone and a speaker, memory storing one or more instructions, and at least one processor configured to execute the one or more instructions. The at least one processor may detect at least one object from the image captured using the camera. The at least one processor may identify a main object of interest to a user, from among the detected at least one object. The at least one processor may obtain context information of the identified main object of interest. The at least one processor may control audio settings of the audio device for obtaining or outputting an audio signal by using the audio device, based on the obtained context information.

Another aspect of the present disclosure provides a method, performed by an electronic device, of controlling an audio device, based on an image. The method according to an embodiment of the present disclosure may include detecting at least one object from an image captured using a camera. The method according to an embodiment of the present disclosure may include identifying a main object of interest to a user, from among the detected at least one object. The method according to an embodiment of the present disclosure may include obtaining context information of the identified main object of interest. The method according to an embodiment of the present disclosure may include controlling audio settings of the audio device for obtaining or outputting an audio signal, the audio device including at least one of a microphone and a speaker, based on the obtained context information.

Another aspect of the present disclosure provides a computer program product including a computer-readable recording medium having recorded thereon a computer program.

### Brief Description of Drawings

This disclosure may be readily understood by reference to the following detailed description and the accompanying drawings, in which reference numerals refer to structural elements.
FIG. 1 is a conceptual diagram illustrating an operation, performed by an electronic device according to an embodiment of the present disclosure, of controlling audio settings of an audio device, based on context information of a main object of interest.
FIG. 2 is a block diagram of a structure of an electronic device according to an embodiment of the present disclosure,
FIG. 3 is a flowchart of an operation method of an electronic device according to an embodiment of the present disclosure.
FIG. 4 is a flowchart of an operation, performed by an electronic device, of identifying a main object of interest from an image, according to an embodiment of the present disclosure.
FIG. 5 is a diagram illustrating an operation, performed by an electronic device according to an embodiment of the present disclosure, of obtaining an image of a main object of interest and an audio signal associated with the main object of interest.
FIG. 6 is a diagram illustrating an operation, performed by an electronic device according to an embodiment of the present disclosure, of applying audio settings corresponding to context information of a main object of interest according to a preset mapping relationship.
FIG. 7A is a diagram illustrating an operation, performed by an electronic device according to an embodiment of the present disclosure, of outputting an equalizer preset corresponding to context information according to an image-to-audio signal mapping relationship.
FIG. 7B is a diagram illustrating an operation, performed by an electronic device according to an embodiment of the present disclosure, of outputting an equalizer preset corresponding to context information according to an image-to-audio signal mapping relationship.
FIG. 8A is a diagram illustrating an operation, performed by an electronic device according to an embodiment of the present disclosure, of determining an equalizer preset, based on context information.
FIG. 8B is a diagram illustrating an operation, performed by an electronic device according to an embodiment of the present disclosure, of determining an equalizer preset, based on context information.
FIG. 8C is a diagram illustrating an operation, performed by an electronic device according to an embodiment of the present disclosure, of determining an equalizer preset, based on context information.
FIG. 9 is a diagram illustrating an operation, performed by an electronic device according to an embodiment of the present disclosure, of performing filtering with respect to an audio signal, based on context information of an image.
FIG. 10 is a diagram illustrating an operation, performed by an electronic device according to an embodiment of the present disclosure, of determining a preset of an audio device, based on context information of a main object of interest.
FIG. 11 is a diagram illustrating an operation, performed by an electronic device according to an embodiment of the present disclosure, of controlling audio settings in order to obtain an audio signal related to a main object of interest.
FIG. 12 is a diagram illustrating an operation, performed by an electronic device according to an embodiment of the present disclosure, of controlling audio settings in order to obtain an audio signal related to a main object of interest.
FIG. 13 is a flowchart of an operation, performed by an electronic device according to an embodiment of the present disclosure, of identifying a main object of interest from a cropped image and obtaining an audio signal associated with the main object of interest.
FIG. 14 is a flowchart of an operation, performed by an electronic device according to an embodiment of the present disclosure, of identifying a main object of interest from a cropped image and obtaining an audio signal associated with the main object of interest.

### Mode of the Invention

Although general terms widely used at present were selected for describing the disclosure in consideration of the functions thereof, these general terms may vary according to intentions of one of ordinary skill in the art, case precedents, the advent of new technologies, or the like. Terms arbitrarily selected by the applicant of the disclosure may also be used in a specific case. In this case, their meanings need to be given in the detailed description of an embodiment of the disclosure. Hence, the terms must be defined based on their meanings and the contents of the entire specification, not by simply stating the terms.

An expression used in the singular may encompass the expression of the plural, unless it has a clearly different meaning in the context. Unless otherwise defined, all terms (including technical and scientific terms) used herein have the same meaning as commonly understood by one of ordinary skill in the art to which this disclosure belongs.

The terms "comprises" and/or "comprising" or "includes" and/or "including" used herein specify the presence of stated elements, but do not preclude the presence or addition of one or more other elements. The terms "unit", "-er (-or)", and "module" described in this specification refers to a unit in which at least one function or operation is performed, and may be implemented as hardware, software, or a combination of hardware and software.

The expression "configured to (or set to)" used herein may be used interchangeably with, for example, "suitable for", "having the capacity to", "designed to", "adapted to", "made to", or "capable of", according to situations. The expression "configured to (or set to)" may not only necessarily refer to "specifically designed to" in terms of hardware. Instead, in some situations, the expression "system configured to" may refer to a situation in which the system is "capable of" together with another device or component parts. For example, the phrase "a processor configured (or set) to perform A, B, and C" may refer to a dedicated processor (such as an embedded processor) for performing a corresponding operation, or a generic-purpose processor (such as a central processing unit (CPU) or an application processor (AP)) that can perform a corresponding operation by executing one or more software programs stored in a memory.

When an element (e.g., a first element) is "coupled to" or "connected to" another element (e.g., a second element), the first element may be directly coupled to or connected to the second element, or, unless otherwise described, a third element may exist therebetween.

Embodiments of the disclosure are described in detail herein with reference to the accompanying drawings so that this disclosure may be easily performed by one of ordinary skill in the art to which the disclosure pertains. The disclosure may, however, be embodied in many different forms and should not be construed as being limited to the examples set forth herein.

Hereinafter, embodiments of the disclosure will be described in detail with reference to the accompanying drawings.

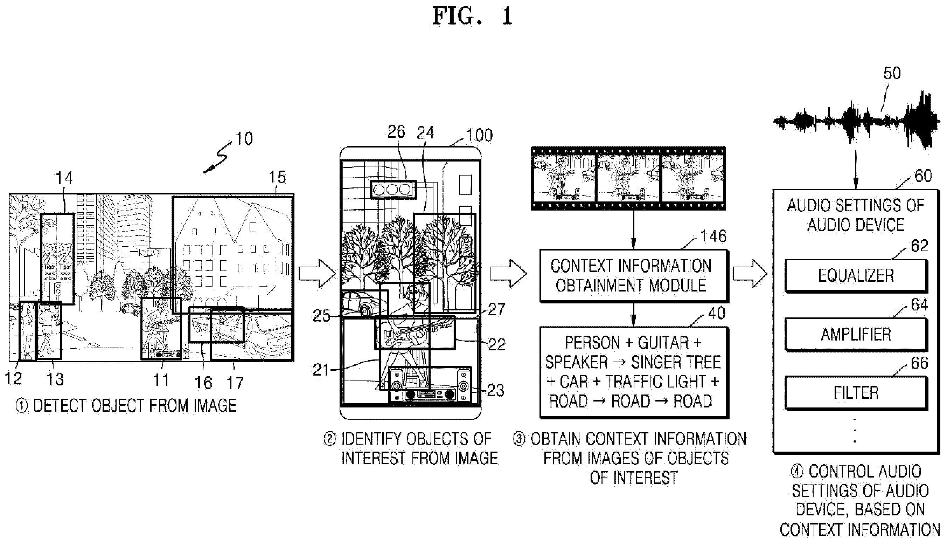

FIG. 1 is a conceptual diagram illustrating an operation, performed by an electronic device 100 according to an embodiment of the present disclosure, of controlling audio settings 60 of an audio device, based on context information of a main object of interest.

Referring to FIG. 1, the electronic device 100 may obtain an image 10 of a subject by using a camera. According to an embodiment of the present disclosure, the electronic device 100 may obtain a plurality of time-sequential image frames by photographing at least one object by using the camera.

The electronic device 100 may detect an object from the image 10 obtained through the camera (operation ①). According to an embodiment of the present disclosure, the electronic device 100 may detect a plurality of objects 11 through 17 from the image 10 by using an object detection model. The object detection model may be implemented as a well-known artificial intelligence (AI) model including, for example, a convolutional neural network (CNN), but embodiments of the present disclosure are not limited thereto. According to an embodiment of the present disclosure, the electronic device 100 may detect the plurality of objects 11 through 17 from the image 10 by performing well-known image processing (e.g., pattern matching, feature extraction, or boundary decision).

The electronic device 100 may identify objects of interest 21 through 27 from the image 10 (operation ②). The electronic device 100 may receive a user input for setting a region of interest 20 among an overall area included in the image 10. According to an embodiment of the present disclosure, the electronic device 100 may receive a zoom-in, panning, focus, or crop input regarding a specific region of interest from a user, and may determine an identified region as the region of interest 20, based on the received input. The electronic device 100 may identify objects 21 through 27 included in the region of interest 20 as the objects of interest 21 through 27.

The electronic device 100 may obtain context information from images of the objects of interest 21 through 27 (operation ③). According to an embodiment of the present disclosure, the electronic device 100 may obtain a plurality of image frames 30 in time series with respect to a subject, and may obtain the context information from the plurality of image frames 30 by using a context information obtainment module 146. The context information obtainment module 146 may be configured with instructions or program code configured to obtain information about at least one of classification of an object of interest, an action of the object of interest, and an environment, location, and time around the object of interest from the images of the objects of interest 21 through 27. In the embodiment illustrated in FIG. 1, the electronic device 100 may classify the objects of interest 21 through 27 (e.g., a person 21, a guitar 22, a speaker 23, a tree 42, a car 25, a traffic light 26, and a road 27) from the plurality of image frames 30 through the context information obtainment module 146, and may obtain 'singer' and 'street' as context information 40 of the objects of interest 21 through 27, based on a result of the classification. For example, the electronic device 100 may further obtain, from the plurality of image frames 30, context information 40 about an action (e.g., singing while playing a guitar) of the 'singer' from among the objects of interest and time (e.g., night time).

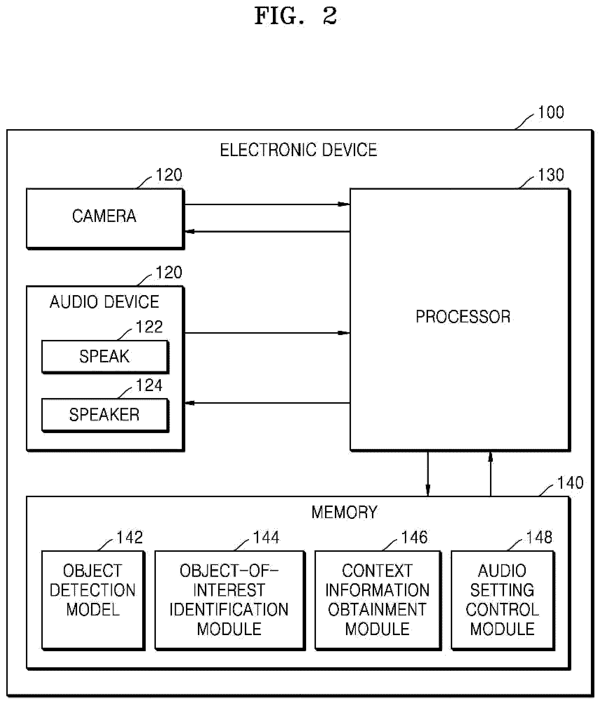

The electronic device 100 may control the audio settings 60 of the audio device, based on the context information (operation ④). The audio device may include, but is not limited to, a microphone 122 of FIG. 2 and a speaker 124 of FIG. 2. The electronic device 100 may obtain an audio signal 50 output (or emitted) by the subject by using the microphone 122. According to an embodiment of the present disclosure, the electronic device 100 may control the audio settings 60 of the audio device to obtain only an audio signal 50 related to context information of the objects of interest 21 through 27 from among the audio signal 50. The electronic device 100 may control at least one of an equalizer 62, an amplifier 64, and a filter among the audio settings 60 of the audio device, based on the context information.

According to an embodiment of the present disclosure, the electronic device 100 may determine an equalizer preset mapped to correspond to the context information, based on a preset mapping relationship between an image context and an equalizer. The electronic device 100 may boost or attenuate a signal level of a specific frequency band in a frequency spectrum of the audio signal 50 according to a determined equalizer preset. In the embodiment illustrated in FIG. 1, the electronic device 100 may select an equalizer preset that amplifies a signal level corresponding to a frequency band of the singer's song among the frequency spectrum of the audio signal 50 and attenuates a signal level corresponding to a frequency band of sound generated by surrounding people 12 and 13 or noise generated by vehicles.

According to an embodiment of the present disclosure, the electronic device 100 may control the amplifier 64 to amplify a frequency band related to the objects of interest 21 through 27 among the frequency bands of the audio signal 50. In the embodiment illustrated in FIG. 1, the electronic device 100 may amplify a signal level corresponding to the frequency band of the singer's song among the frequency band of the audio signal 50, by controlling the amplifier 64.

According to an embodiment of the present disclosure, the electronic device 100 may attenuate or remove a frequency band of an audio signal related to the objects 12, 13, 14, 15, 16, and 17 other than the objects of interest 21 through 27, by using a band stop filter in the filter 66.

In general, when a user takes a photo or shoots a video by using a camera, the user selects the objects of interest 21 through 27 among objects that are to be shot, and adjusts camera settings, such as zooming in, zooming out, or panning, with respect to the selected objects of interest 21 through 27. In the conventional art, even when a user adjusts the camera settings, audio settings of an audio device are not changed or adjusted according to objects of interest 21 through 27. For example, even when the user zooms in on a singer singing in a square, the microphone 122 records not only the singer's song, but also the noise of vehicles around the square, the cheers of the audience, or the voices of pedestrians. In order for the user to obtain an audio signal about the object of interest (e.g., the singer's singing sound), the audio settings 60 of the audio device need to be manually changed or adjusted through a user input.

The present disclosure aims to provide the electronic device 100 for controlling audio settings of the audio device to obtain an audio signal related to the objects of interest 21 through 27 set by a user when capturing an image content (e.g., a video) obtained using a camera, and an operation method of the electronic device 100.

The electronic device 100 according to an embodiment of the present disclosure obtains context information about the objects of interest 21 through 27 and controls the audio settings 60 of the audio device, based on the context information, to boost only an audio signal related to an object of interest to a user, thereby providing a technical effect that improves the quality of an audio signal recorded through the microphone 122 or an audio signal output through the speaker 124. For example, in the embodiment illustrated in FIG. 1, the electronic device 100 may boost and record only a song of a street singer or stage artist or only the music without any surrounding noise. As another example, when a worker works in a noisy work environment, the electronic device 100 may filter or amplify only the sound of a specific machine part of interest to the worker, thereby improving the worker's concentration so that the worker may focus on the sound of the specific machine part.

In addition, the electronic device 100 according to an embodiment of the present disclosure may provide a technical effect of allowing a user with hearing impairment to focus on only the speech sound of a specific speaker or more easily hear sound of a specific object.

FIG. 2 is a block diagram illustrating components of the electronic device 100 according to an embodiment of the present disclosure.

The electronic device 100 illustrated in FIG. 2 is a device that obtains an image of a subject and controls audio settings of an audio device based on context information of the image, and may be implemented as, for example, a smartphone, a smart TV, or a tablet personal computer (PC). However, the present disclosure is not limited thereto, and the electronic device 100 may be implemented as any of various devices, such as a laptop computer, a desktop computer, an e-book terminal, a digital broadcast terminal, personal digital assistants (PDAs), a portable multimedia player (PMP), a navigation device, an MP3 player, a camcorder, or a wearable device.

According to an embodiment of the present disclosure, the electronic device 100 may be implemented as an augmented reality device. In the present disclosure, an 'AR device' is a device capable of implementing 'augmented reality', and generally includes not only augmented reality glasses which are worn on the face of a user but also a head mounted display (HMD) apparatus or augmented reality helmet which is worn on the head of a user.

Referring to FIG. 2, the electronic device 100 may include a camera 110, an audio device 120, a processor 130, and a memory 140. The camera 110, the audio device 120, the processor 130, and the memory 140 may be electrically and/or physically connected to each other.

The components shown in FIG. 2 are only according to an embodiment of the present disclosure, and the components included in the electronic device 100 are not limited to those shown in FIG. 2. The electronic device 100 may not include some of the components illustrated in FIG. 2, and may further include components not illustrated in FIG. 2. According to an embodiment of the present disclosure, the electronic device 100 may further include a display that displays a preview image of a subject captured by the camera 110. The display may be configured with a physical device including at least one of a liquid crystal display, a thin film transistor-liquid crystal display (TFT-LCD), an organic light-emitting diode (OLED), a flexible display, a three-dimensional (3D) display, and an electrophoretic display. According to an embodiment of the present disclosure, the display may be configured as a touch screen including a touch interface. However, the present disclosure is not limited thereto, and, in a case that the electronic device 100 is an augmented reality device in the form of glasses (i.e., augmented reality glasses), the display may include a lens, a waveguide, and an optical module (e.g., a projector).

According to an embodiment of the present disclosure, the electronic device 100 may further include an input interface for receiving a user input. The input interface may include, for example, a keyboard, a mouse, a touch screen, or a voice input device (e.g., a microphone), and may include other input devices which are well known to one of ordinary skill in the art. In a case that the display is configured as a touch screen, the display may be a component integrated with a user input interface configured as a touch panel.

According to an embodiment of the present disclosure, the electronic device 100 may be configured as a portable device, and may further include a battery for supplying driving power to the camera 110, the audio device 120, and the processor 130.

The camera 110 is configured to photograph a subject within a space to obtain an image. The camera 110 may obtain a video composed of a plurality of time-sequential image frames by consecutively photographing the subject over time. The camera 110 may include a lens module, an image sensor, and an image processing module. The camera 110 may obtain a still image or a video obtained by an image sensor (e.g., a complementary metal-oxide-semiconductor (CMOS) sensor or a charge-coupled device (CCD)). The image processing module may process the still image or video obtained through the image sensor, to thereby extract necessary information and transmit the extracted necessary information to the processor 130.

The audio device 120 is a hardware device configured to obtain an audio signal from an external source or output the audio signal. The audio device 120 may include the microphone 122 and the speaker 124.

The microphone 122 is configured to obtain voice or other sounds from an external object and convert the obtained voice or other sounds into an audio signal. According to an embodiment of the present disclosure, the microphone 122 may be configured as a microphone array including a plurality of microphone elements, as a directional microphone, or as a multi-pattern microphone. The microphone 122 may provide the audio signal from the external object to the processor 130.

The speaker 124 is configured to output the audio signal. The speaker 124 may output the audio signal according to audio settings, such as an equalizer preset, under a control by the processor 130.

The processor 130 may execute one or more instructions of a program stored in the memory 140. The processor 130 may include hardware components that perform arithmetic, logic, input/output operations and signal processing. For example, the processor 120 may be configured as at least one of a central processing unit, a microprocessor, a graphics processing unit, application specific integrated circuits (ASICs), digital signal processors (DSPs), digital signal processing devices (DSPDs), programmable logic devices (PLDs), and field programmable gate arrays (fPGAs), but the present disclosure is not limited thereto.

The processor 130 is illustrated as a single element in FIG. 2, but is not limited thereto. According to an embodiment, the processor 130 may be provided as one or in plurality.

According to an embodiment of the disclosure, the processor 130 may include an artificial intelligence (AI) processor that perform AI learning. In this case, the AI processor may detect an object from an image by using an AI model, and obtain context information of the detected object. The AI processor may be manufactured in the form of a dedicated hardware chip for AI, or may be manufactured as a part of an existing general-purpose processor (for example, a CPU or an AP) or a dedicated graphic processor (for example, a GPU) and may be mounted on the processor 130 within the electronic device 100.

The memory 140 may include at least one type of storage medium from among, for example, a flash memory type storage medium, a hard disk type storage medium, a multimedia card micro type storage medium, a card type memory (for example, SD or XD memory), a random access memory (RAM), a static RAM (SRAM), a read-only memory (ROM), an electrically erasable programmable ROM (EEPROM), a programmable ROM (PROM), and an optical disk. According to an embodiment of the present disclosure, the memory 140 is accessible through a network, and may be implemented as a web storage or cloud server that performs a storage function. In this case, the electronic device 100 may further include a communication interface, and may communicate with the web storage or cloud server through the communication interface and perform data transmission and reception.

The memory 140 may store instructions or program code that enable the electronic device 100 to obtain context information from an image and control audio settings of an audio device, based on the obtained context information. According to an embodiment of the present disclosure, the memory 140 may store at least one of instructions, an algorithm, a data structure, program code, and an application program that are readable by the processor 130. The instructions, algorithm, data structure, and program code stored in the memory 140 may be implemented in, for example, programming or scripting languages such as C, C++, Java, assembler, and the like.

The memory 140 may store instructions, algorithm, data structure, or program code related to an object detection model 142, an object-of-interest identification module 144, a context information obtainment module 146, and an audio setting control module 148. A module included in the memory 140 denotes a unit processing a function or operation performed by the processor 130, and may be implemented as software, such as instructions, algorithm, data structure, or program code.

According to embodiments below, the processor 130 may be implemented by executing the instructions or program codes stored in the memory 140.

The object detection model 142 includes instructions or program code related to an operation and/or function for detecting an object from an image. According to an embodiment of the present disclosure, the object detection model 142 may be configured as an artificial neural network model. The object detection model 142 may be a deep neural network model trained to detect an object through a supervised learning method by applying a bounding box image detectable as an object from several tens of thousands or hundreds of millions of input images as input data and applying a label value regarding a result of the object detection as a ground truth. The object detection model 142 may be implemented as, for example, a convolutional neural network, but the present disclosure is not limited thereto. The object detection model 142 may be implemented as, for example, a region-based convolutional neural network (R-CNN), a single shot multibox detector (SSD) model, YOLO v4, a CenterNet, or a MobileNet.

However, the object detection model 142 of the present disclosure is not limited to the aforementioned deep neural network model. The object detection model 142 may be configured as a well-known image processing model (e.g., pattern matching, feature extraction, or boundary decision).

The processor 130 may obtain an image by taking a picture of a subject by using the camera 110. The processor 130 may detect at least one object from the image by executing instructions or program code associated with the object detection model 142. According to an embodiment of the present disclosure, the processor 130 may obtain a plurality of time-sequential image frames from the camera 110, and may detect at least one object from the plurality of image frames by using the object detection model 142.

The object-of-interest identification module 144 is composed of instructions or program code related to an operation and/or function of identifying a main object of interest to the user from among the detected at least one object. According to an embodiment of the present disclosure, the processor 130 may identify an object of interest from among the at least one object detected from the plurality of image frames, by executing the instructions or program code related to the object-of-interest identification module 144. According to an embodiment of the present disclosure, the electronic device 100 may further include an input interface for receiving one of a user's zoom-in input, a user's panning input, a user's focus input, or a user's crop input. For example, the input interface may be configured as a touchscreen, and may receive a touch input for zooming in, focusing, or cropping. The processor 130 may identify an area zoomed in, panned, focused, or cropped by a user input received through the input interface, and detect an object included in the identified area as the object of interest.

The context information obtainment module 146 is composed of instructions or program codes related to an operation and/or function of obtaining context information of the object of interest. In the present disclosure, the 'context information' may refer to information about a situation or context identified from an image, and may include, for example, information about at least one of classification, action, time, place, location, and surrounding environment of the object of interest. According to an embodiment of the present disclosure, the processor 130 may obtain the context information about the object of interest, by executing the instructions or program code associated with the context information obtainment module 146.

According to an embodiment of the present disclosure, the context information obtainment module 146 may be configured as an artificial neural network model. The context information obtainment module 146 may be implemented as a well-known artificial neural network model including, for example, a convolutional neural network model. The processor 130 may obtain at least one of classification information, action information, time information, location information, place information, and surrounding environment information of the object of interest by analyzing the object of interest through the context information obtainment module 146. In the present disclosure, the 'classification information' refers to information about a result of identifying the object of interest, and may be information indicating whether the object of interest is a person, an animal, or a thing, or indicating whether the object of interest is a singer, a musical instrument player, an athlete, or an instructor even when the object of interest is a person.

The audio setting control module 148 is composed of instructions or program codes related to an operation and/or function of controlling audio settings of the audio device 120, based on the context information. According to an embodiment of the present disclosure, the processor 130 may control audio settings for recording an audio signal through the microphone 122 or outputting an audio signal through the speaker 124, by executing instructions or program code associated with the audio setting control module 148. In the present disclosure, the 'audio settings' may include setting information for controlling at least one of an equalizer, an amplifier, and a filter of the audio device 120.

According to an embodiment of the disclosure, the audio device 120 may store a plurality of equalizer presets. The processor 130 may select an equalizer preset mapped to correspond to context information according to a preset mapping relationship from among the plurality of equalizer presets. The preset mapping relationship may be included in the audio setting control module 148, but the disclosure is not limited thereto.

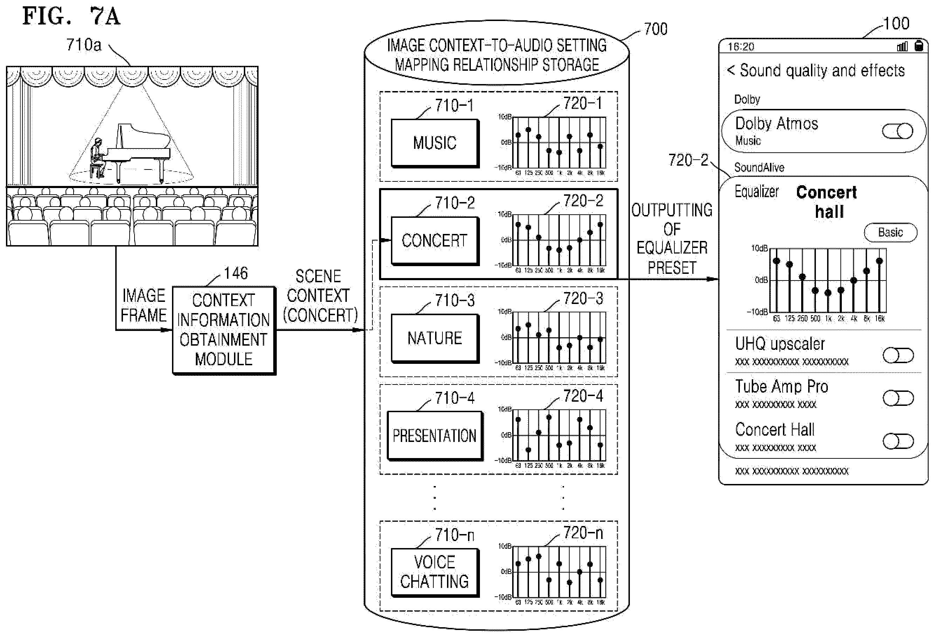

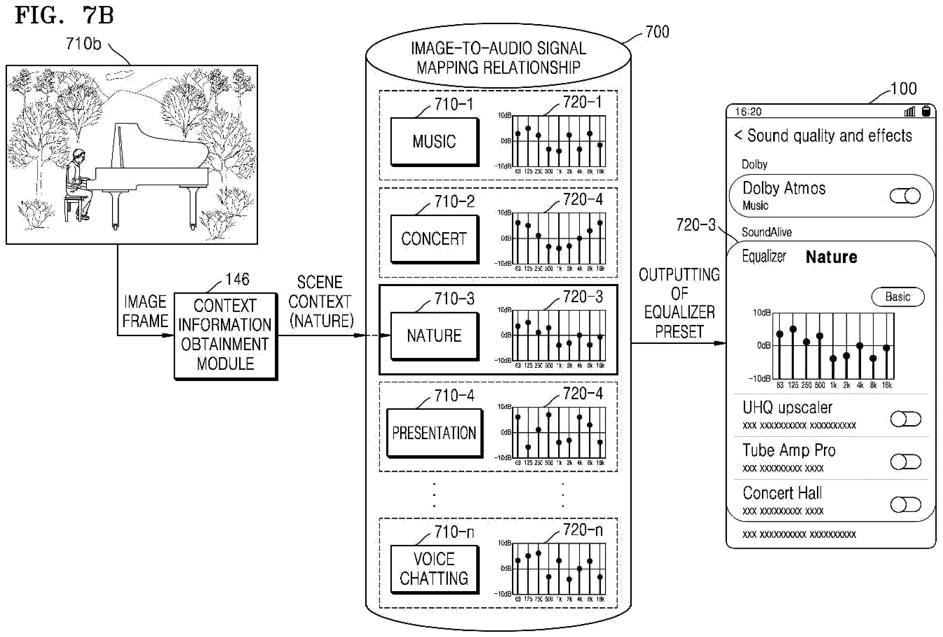

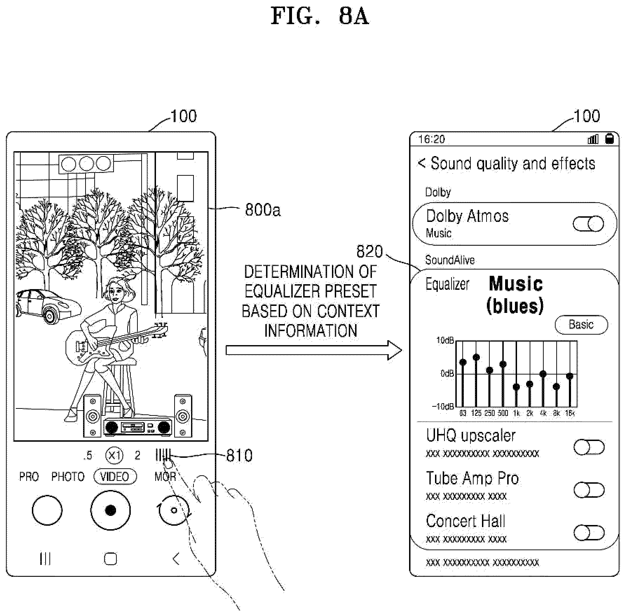

According to an embodiment of the present disclosure, the processor 130 may detect an action of the object of interest through the context information obtainment module 146, and may determine an equalizer preset mapped to correspond to the action of the object of interest according to the preset mapping relationship included in the audio setting control module 148. An embodiment in which the processor 130 determines an equalizer preset, based on the context information of the object of interest will be described in detail with reference to FIGS. 7A, 7B, and 8A through 8C.

According to an embodiment of the present disclosure, the processor 130 may amplify a frequency band related to the object of interest among the frequency band of the audio signal, by using the amplifier of the audio device 120. For example, the processor 130 may identify a frequency band related to the object of interest by using information about the frequency band of an audio signal for each object, and may amplify only a frequency band corresponding to the identified frequency band among the frequency spectrum of the audio signal obtained through the microphone 122. As another example, the processor 130 may amplify only the audio signal related to the object of interest by using an audio-visual speech separation algorithm implemented as an artificial intelligence model or by using a pixel-by-pixel audio signal separation algorithm (e.g., a PixelPlayer of The Sound of Pixel).

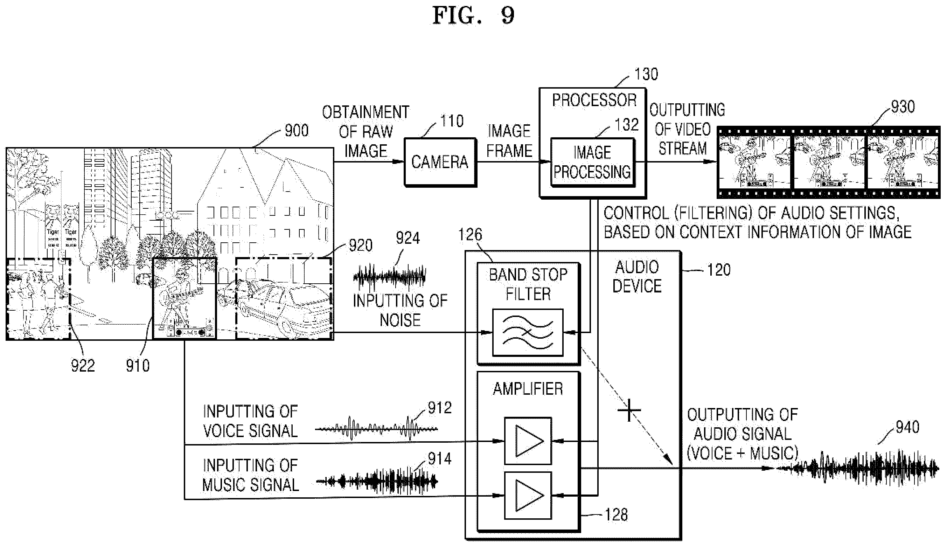

The processor 130 may attenuate an audio signal in a remaining frequency band other than the frequency band related to the object of interest. According to an embodiment of the present disclosure, the processor 130 may perform filtering to attenuate or cut off a frequency band of an audio signal related to an object other than the object of interest, by using a band stop filter. An embodiment in which the processor 130 amplifies or attenuates an audio signal by controlling the amplifier and/or the filter will be described in detail with reference to FIGS. 9 through 12.

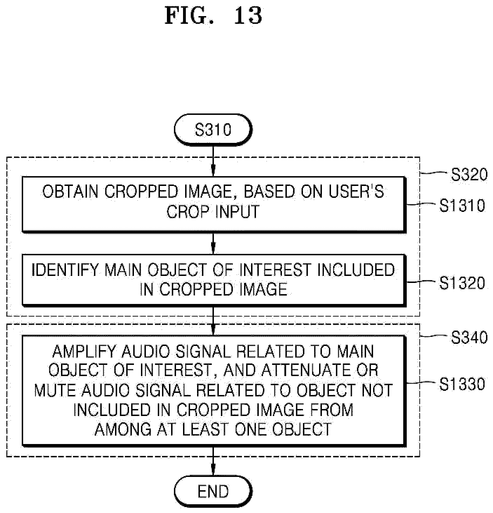

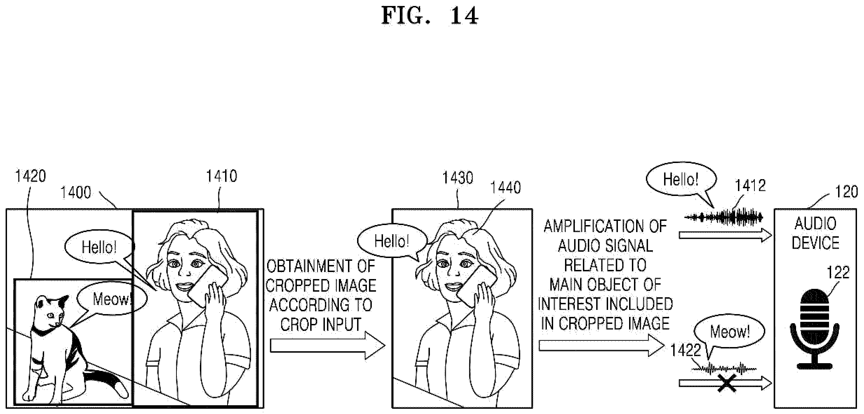

According to an embodiment of the present disclosure, the electronic device 100 may receive, through the input interface, a crop input of a user for cropping a specific area of an image. The processor 130 may obtain a cropped image, based on the crop input, and may amplify an audio signal related to an object of interest included in the cropped image. According to an embodiment of the present disclosure, the processor 130 may attenuate or mute an audio signal associated with at least one object that is not included in the cropped image. An embodiment in which the processor 130 amplifies an audio signal related to an object of interest included in a cropped image will be described in detail with reference to FIGS. 13 and 14.

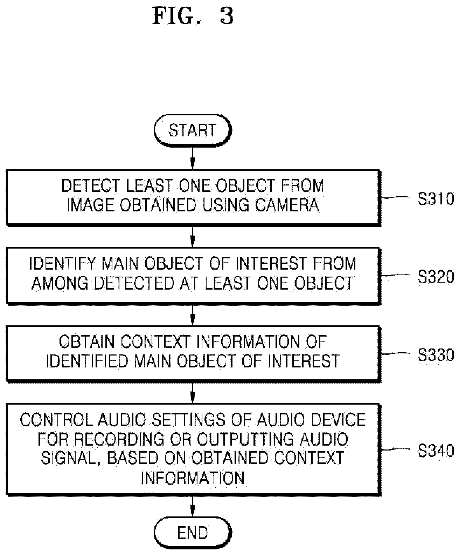

FIG. 3 is a flowchart of an operation method of the electronic device 100 according to an embodiment of the present disclosure.

In operation S310, the electronic device 100 detects at least one object from an image obtained using a camera. According to an embodiment of the present disclosure, the electronic device 100 may obtain a plurality of time-sequential image frames by consecutively photographing a subject by using the camera over time. The electronic device 100 may detect at least one object from the plurality of image frames by using an object detection model.

According to an embodiment of the present disclosure, the object detection model 142 may be configured as an artificial neural network model. For example, the object detection model may be implemented as a convolutional neural network. However, the present disclosure is not limited thereto, and the object detection model may be implemented as, for example, a region-based convolutional neural network (R-CNN), a single shot multibox detector (SSD) model, YOLO v4, a CenterNet, or a MobileNet.

However, the present disclosure is not limited thereto, and the electronic device 100 may detect at least one object from the plurality of image frames by using a well-known image processing model (e.g., pattern matching, feature extraction, or boundary decision).

In operation S320, the electronic device 100 identifies a main object of interest from among the detected at least one object. According to an embodiment of the present disclosure, the electronic device 100 may perform one of zoom-in, panning, focusing, or cropping, based on a user input. The processor 100 may identify an area zoomed in, panned, focused, or cropped by the user input, and detect an object included in the identified area as the object of interest from among the at least one object detected in operation S310.

In operation S330, the electronic device 100 obtains context information of the identified main object of interest. In the present disclosure, the 'context information' may refer to information about a situation or context identified from an image, and may include, for example, information about at least one of classification, action, time, place, location, and surrounding environment of the object of interest. According to an embodiment of the present disclosure, the electronic device 100 may obtain at least one of classification information, action information, time information, location information, place information, and surrounding environment information of the object of interest, by analyzing the object of interest by using an artificial intelligence model.

In operation S340, the electronic device 100 controls audio settings of an audio device for recording or outputting an audio signal, based on the obtained context information. The electronic device 100 may control audio settings for recording an audio signal through the microphone 122 of FIG. 2 or outputting an audio signal through the speaker 124 of FIG. 2. In the present disclosure, the 'audio settings' may include setting information for controlling at least one of an equalizer, an amplifier, and a filter of the audio device including at least one of the microphone 122 and the speaker 124.

According to an embodiment of the disclosure, the electronic device 100 may store a plurality of equalizer presets of the audio device. The electronic device 100 may determine an equalizer preset corresponding to the context information from among the plurality of pre-stored equalizer presets by using, for example, a decision tree, a fuzzy logic, or other well-known algorithms.

According to an embodiment of the present disclosure, the electronic device 100 may select an equalizer preset mapped to correspond to the context information according to a preset mapping relationship from among the plurality of equalizer presets. The electronic device 100 may detect an action of the object of interest, and may determine an equalizer preset mapped to correspond to the action of the object of interest according to the preset mapping relationship.

According to an embodiment of the present disclosure, the electronic device 100 may amplify a frequency band related to the object of interest among the frequency band of the audio signal, by using the amplifier of the audio device. For example, the electronic device 100 may identify a frequency band related to the object of interest, by using information about the frequency band of the audio signal for each object, and may amplify only a frequency band corresponding to the identified frequency band among the frequency spectrum of the audio signal obtained through the microphone 122.

The electronic device 100 may attenuate an audio signal in a remaining frequency band other than the frequency band related to the object of interest. The electronic device 100 may perform filtering to attenuate or cut off a frequency band of an audio signal related to an object other than the object of interest, by using a band stop filter.

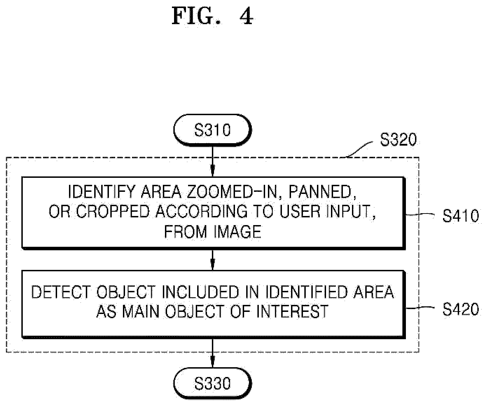

FIG. 4 is a flowchart of an operation, performed by the electronic device 100, of identifying an object of interest from an image, according to an embodiment of the present disclosure.

Operations S410 and S420 of FIG. 4 are detailed operations of operation S320 of FIG. 3. Operation S410 of FIG. 4 may be performed after operation S310 of FIG. 3 is performed. Operation S330 of FIG. 3 may be performed after operation S420 of FIG. 4 is performed.

In operation S410, the electronic device 100 identifies an area zoomed-in, panned, or cropped according to a user input, from an image. According to an embodiment of the present disclosure, the electronic device 100 may further include an input interface for receiving one of a user's zoom-in input, a user's panning input, a user's focus input, or a user's crop input. The input interface may include, for example, a keyboard, a mouse, a touch screen, a voice input device (e.g., a microphone), and may include other input devices which are well known to one of ordinary skill in the art. For example, the input interface may be configured as a touchscreen, and the electronic device 100 may receive a touch input for zooming in, focusing, or cropping through the touch screen. The electronic device 100 may identify an area zoomed-in, panned, focused, or cropped by a user input received through the input interface.

In operation S420, the electronic device 100 may detect an object included in the identified area as the object of interest. According to an embodiment of the present disclosure, the electronic device 100 may detect, as the object of interest, an object included in an area enlarged by a zoom-in input. According to an embodiment of the present disclosure, the electronic device 100 may detect, as the object of interest, an object located at a center portion of a specific area through a panning input. According to an embodiment of the present disclosure, the electronic device 100 may detect, as the object of interest, an object focused on by the camera by a user's focus input. According to an embodiment of the present disclosure, the electronic device 100 may detect, as the object of interest, an object included in an area cropped by a crop input.

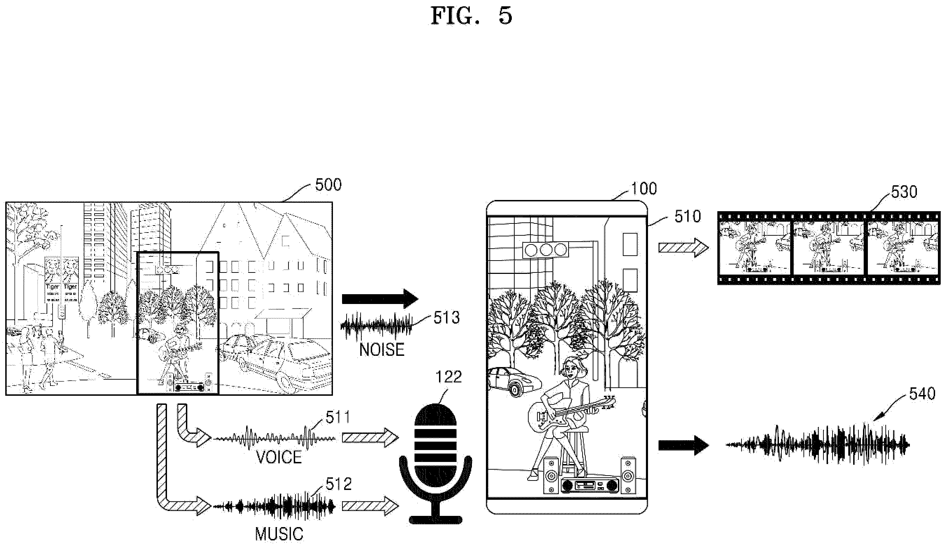

FIG. 5 is a diagram illustrating an operation, performed by the electronic device 100 according to an embodiment of the present disclosure, of obtaining an image of an object of interest 520 and an audio signal associated with the object of interest 520.

Referring to FIG. 5, the electronic device 100 may obtain an image 500 by photographing at least one object located in a real space by using the camera 1110 of FIG. 2. According to an embodiment of the present disclosure, the electronic device 100 may capture a video of the at least one object, and may record a voice, music, or noise output by the at least one object by using the microphone 122 during the video capturing. The microphone 122 may convert the recorded voice, music, noise, or other sounds from the at least one object into an audio signal. In the embodiment illustrated in FIG. 5, the electronic device 100 may obtain, through the microphone 122, not only audio signals of a singer's voice 511 and music 512 but also an audio signal of noise 513 caused by cars or pedestrians around the singer.

The electronic device 100 may identify a region of interest 510 from the entire area of the image 500, based on a user input, and may detect the object of interest 520 included within the region of interest 510. For example, the electronic device 100 may receive a zoom-in input from a user and enlarge a specific area according to a zoom-in input. The electronic device 100 may identify the enlarged area as the region of interest 510. The electronic device 100 may detect an object included in the region of interest 510, by using an object detection model. According to an embodiment of the present disclosure, the object detection model may be a deep neural network model such as a convolutional neural network, but is not limited thereto. According to an embodiment of the present disclosure, the electronic device 100 may detect the object included in the region of interest 510 by using a well-known image processing model (e.g., pattern matching, feature extraction, or boundary decision). The electronic device 100 may determine, as the object of interest 520, the detected object within the region of interest 510.

The electronic device 100 may obtain a plurality of image frames 530 by consecutively photographing the object of interest 520 over time through video recording. The electronic device 100 may obtain an audio signal 540 including the voice 511 and the music 512 both output by the object of interest 520 by using the microphone 122, simultaneously when obtaining the plurality of image frames 530.

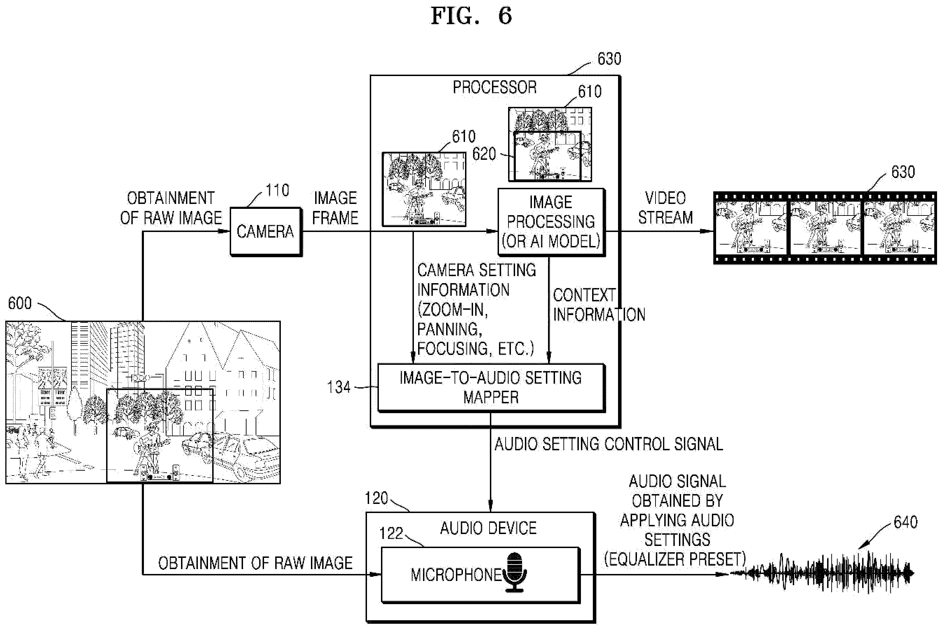

As in the embodiment illustrated in FIG. 5, a user may want to zoom in on the area of interest 510 including the object of interest 520, which is a street singer, by using the camera of the electronic device 100 and record only the voice 511 or music 512 of the street singer by using the microphone 122. However, because the microphone 122 obtains not only audio signals of the voice 511 and the music 512 both output by the object of interest 520, but also an audio signal of noise 513 caused by objects (e.g., cars or pedestrians) around the object of interest 520, it is necessary to attenuate or remove the audio signal of the noise 513. The present disclosure provides the electronic device 100 capable of boosting or amplifying an audio signal generated by the object of interest 520 and attenuating or removing the noise 513 generated by objects other than the object of interest 520, by controlling the audio settings of the audio device including the microphone 122. An embodiment in which the electronic device 100 of the present disclosure controls an equalizer from among the audio settings of the audio device, based on context information of the object of interest 520, will be described in detail with reference to FIGS. 6, 7, and 8A through 8C.

FIG. 6 is a diagram illustrating an operation, performed by the electronic device 100 according to an embodiment of the present disclosure, of applying audio settings corresponding to context information of an object of interest according to a preset mapping relationship.

Referring to FIG. 6, the electronic device 100 may include the camera 110, the audio device 120, and the processor 130. However, only essential components for explaining the operation of the electronic device 100 are illustrated in FIG. 6, and the electronic device 100 is not limited to including only the configuration illustrated in FIG. 6.

The electronic device 100 may obtain a raw image 600 by photographing an object in a real space by using the camera 110. The camera 110 may provide an image frame of the obtained raw image 600 to the processor 130. According to an embodiment of the present disclosure, the camera 110 may provide camera setting information set by a user input to the processor 130. The 'camera setting information' may be setting information regarding shooting using the camera 110 by the user input. The camera setting information may include information regarding at least one of zoom-in/zoom-out, panning, or focus, for example.

In the embodiment illustrated in FIG. 6, the electronic device 100 may receive a zoom-in input for the camera 110, enlarge a specific area according to the zoom-in input, and identify the enlarged area as a region of interest 610. The processor 130 may provide camera setting information according to a zoom-in input (e.g., zoom ratio information or information of the region of interest 610) to an image-to-audio setting mapper 134.

The processor 130 may obtain context information from the image frame of the raw image 600 obtained by the camera 110, by inputting the image frame to an image processor 132. According to an embodiment of the present disclosure, the image processor 132 may be implemented as an artificial intelligence model. For example, the image processor 132 may be implemented as, for example, a convolutional neural network, but the present disclosure is not limited thereto. The image processor 132 may also be implemented as, for example, a region-based convolutional neural network (R-CNN), a single shot multibox detector (SSD) model, YOLO v4, a CenterNet, or a MobileNet. The image processor 132 may identify an object of interest, based on the camera setting information, and may obtain the context information from the object of interest. According to an embodiment of the present disclosure, the image processor 132 may obtain context information including at least one of classification information, action information, time information, location information, place information, and surrounding environment information of the object of interest. In the embodiment illustrated in FIG. 6, the processor 130 may identify an object of interest within the region of interest 610 through the image processor 132, and may obtain the context information of the object of interest. For example, the processor 130 may identify an object of interest within a bounding box 620 from the image frame of the raw image 600, and may obtain information of 'singer (classification information)', 'street (place information)', or 'evening time (time information)' as the context information of the object of interest.

The processor 130 may obtain a video stream 630 regarding the object of interest through the image processor 132.

The processor 130 may provide the camera setting information obtained by the camera 110 and the context information obtained by the image processor 132 to the image-to-audio setting mapper 134. The image-to-audio setting mapper 134 may include information regarding a mapping relationship between the context information obtained from the image frame of the raw image 600 and an equalizer preset of the audio device 120. The mapping relationship between the context information obtained from the image frame and the equalizer preset of the audio device 120 may be set in advance before the raw image 600 is obtained. According to an embodiment of the present disclosure, the information regarding the mapping relationship between the context information and the equalizer preset may be stored in the memory 140 of FIG. 2. The information regarding the mapping relationship between the context information and the equalizer preset will be described in detail with reference to FIGS. 7A and 7B.

The audio device 120 may include the microphone 122 and may obtain an audio signal output by an object by using the microphone 122. According to an embodiment of the present disclosure, the microphone 122 may obtain a raw audio stream including voice, music, or noise output by an object.

The processor 130 may transmit an audio setting control signal to the audio device 120, and may control the audio device 120, based on the audio setting control signal. According to an embodiment of the present disclosure, the processor 130 may determine an equalizer preset mapped to correspond to the context information by the image-to-audio setting mapper 134, and may control the microphone 122 to obtain an audio signal according to the determined equalizer preset. In the embodiment illustrated in FIG. 6, the processor 130 may identify the equalizer preset (e.g., an equalizer preset mapped to 'music') mapped to correspond to the context information ('singer', 'street', or 'evening time') of the object of interest by the image-to-audio setting mapper 134, and may control the microphone 122 to obtain the audio signal by using the identified equalizer preset. According to an embodiment of the present disclosure, the processor 130 may control the microphone 122 to amplify a frequency band related to a singer's voice or music among the frequency spectrum of an audio signal included in the raw audio stream and attenuate or remove a frequency band related to surrounding's noise or cheers. The microphone 122 may obtain an audio signal 640 by applying the audio settings (e.g., equalizer presets) provided by the processor 130 to the raw audio stream.

FIG. 7A is a diagram illustrating an operation, performed by the electronic device 100 according to an embodiment of the present disclosure, of outputting an equalizer preset corresponding to context information according to an image-to-audio signal mapping relationship.

Referring to FIG. 7A, an image context-to-audio setting mapping relationship storage 700 may store information regarding a correspondence relationship between a plurality of contexts 710-1 through 710-n and a plurality of equalizer presets 720-1 through 720-n. According to an embodiment of the present disclosure, the image context-to-audio setting mapping relationship storage 700 may be configured as a non-volatile memory. The non-volatile memory refers to a storage medium that may store and maintain information even when power is not supplied and may use the stored information again when power is supplied. The non-volatile memory may include, for example, at least one of a flash memory, a hard disk, a solid state drive (SSD), a multimedia card micro type, and a card type memory (e.g., SD or XD memory), a ROM, a magnetic disk, or an optical disk. According to an embodiment of the present disclosure, the image context-to-audio settings mapping relationship storage 700 may be a component included in the memory 140 of FIG. 2 or included within the audio setting control module 148 of FIG. 2. However, the present disclosure is not limited thereto, and the image context-to-audio setting mapping relationship storage 700 may be implemented in the form of an external memory not included in the electronic device 100, or may be implemented as a web-based storage medium or cloud server connected via wired or wireless data communication.

The image context-to-audio setting mapping relationship storage 700 may store information regarding the plurality of equalizer presets 720-1 through 720-n mapped to respectively correspond to the plurality of contexts 710-1 through 710-n. According to an embodiment of the present disclosure, the mapping relationship between the plurality of contexts 710-1 through 710-n and the plurality of equalizer presets 720-1 through 720-n may be previously set. In the embodiment illustrated in FIG. 7A, a first context 710-1 representing 'music' may be mapped to a first equalizer preset 720-1, a second context 710-2 representing 'concert' may be mapped to a second equalizer preset 720-2, and an n-th context 710-n representing 'voice chatting' may be mapped to an n-th equalizer preset 720-n.

The processor 130 (see FIG. 2) of the electronic device 100 may obtain context information from an image 710a by using the context information obtainment module 146. The processor 130 may determine a scene context corresponding to an equalizer preset from the context information. The processor 130 may determine a scene context from the context information by using, for example, a decision tree, a fuzzy logic, or other well-known algorithms. In the embodiment illustrated in FIG. 7A, the processor 130 may obtain context information including 'performer' (classification information), 'piano performance' (action information), 'concert hall' (location information), or 'audience' (environmental information) from the image 710a through the context information obtainment module 146, and may determine, from the context information, that the scene context is 'concert'.

The processor 130 may identify an equalizer preset mapped with context information identical or similar to the obtained scene context from among the plurality of equalizer presets 720-1 through 720-n stored in the image context-to-audio setting mapping relationship storage 700. In the embodiment illustrated in FIG. 7A, the processor 130 may identify the second equalizer preset 720-2 mapped to correspond to the second context 710-2 representing 'concert' from the image context-to-audio setting mapping relationship storage 700. For example, the second equalizer preset 720-2 may be an equalizer preset optimized for a 'concert hall' by boosting (or amplifying) a frequency band corresponding to the music of the concert. The processor 130 may control the audio device (e.g., the microphone 122 of FIG. 6) to obtain an audio signal by using the identified second equalizer preset 720-2.

FIG. 7B is a diagram illustrating an operation, performed by the electronic device 100 according to an embodiment of the present disclosure, of outputting an equalizer preset corresponding to context information according to an image-to-audio signal mapping relationship.

The embodiment illustrated in FIG. 7B is identical to the embodiment illustrated in FIG. 7A except for a context 710-3 obtained from an image 710b and an identified equalizer preset 720-3, therefore, redundant descriptions are omitted.

Referring to FIG. 7B, the electronic device 100 may obtain context information from the image 710b, and may identify an equalizer preset mapped with context information identical or similar to the obtained context from among the plurality of equalizer presets 720-1 through 720-n stored in the image context-to-audio setting mapping relationship storage 700. In the embodiment illustrated in FIG. 7B, the processor 130 (see FIG. 2) of the electronic device 100 may obtain context information including 'performer' (classification information), 'mountain' (classification information), 'tree (classification information),'piano performance' (action information), or 'nature' (environmental information) from the image 710b through the context information obtainment module 146, and may determine, from the context information, that a scene context is 'nature'.

The processor 130 may identify the third equalizer preset 720-3 mapped to correspond to the third context 710-3 representing 'nature' from the image context-to-audio setting mapping relationship storage 700. For example, the third equalizer preset 720-3 may be an equalizer preset optimized for a 'nature environment' by boosting (or amplifying) a frequency band corresponding to the nature environment. The processor 130 may control the audio device (e.g., the microphone 122 of FIG. 6) to obtain an audio signal by using the identified third equalizer preset 720-3.

FIG. 8A is a diagram illustrating an operation, performed by the electronic device 100 according to an embodiment of the present disclosure, of determining an equalizer preset, based on context information.

Referring to FIG. 8A, the electronic device 100 may obtain context information from an object-of-interest image 800a. According to an embodiment of the present disclosure, the processor 130 (see FIG. 2) of the electronic device 100 may obtain at least one of classification information, action information, time information, location information, place information, and surrounding environment information of the object of interest by analyzing the object-of-interest image 800a by using the context information obtainment module 146 of FIG. 2. In the embodiment illustrated in FIG. 8A, the electronic device 100 may obtain at least one piece of information among a 'singer' (classification information), an 'action of playing a guitar and singing' (action information), 'evening time' (time information), and a 'street' (location information), from the object-of-interest image 800a.

The electronic device 100 may display a user interface (UI) 810 for executing an operation and/or function of controlling audio settings, based on the context information. For example, the electronic device 100 may display a smart audio setting UI 810 on the display. According to an embodiment of the present disclosure, the electronic device 100 may receive a user's touch input of selecting the smart audio setting UI 810. In response to the touch input being received, the electronic device 100 determines an equalizer preset of the audio device, based on the context information.

The electronic device 100 may determine an equalizer preset corresponding to the context information obtained from the object-of-interest image 800a, based on a preset mapping relationship between the context information and the equalizer preset. According to an embodiment of the present disclosure, a mapping relationship between the context information and the equalizer preset may be previously set, and the preset mapping relationship may be stored in the memory 140 of FIG. 2 or in the audio setting control module 148 of FIG. 2. A description of the mapping relationship between the context information and the equalizer preset is the same as that given above with reference to FIG. 7A, therefore, redundant descriptions are omitted. The electronic device 100 may determine a scene context 'music', based on context information of 'singer' (classification information), 'playing guitar and singing' (action information), 'evening time' (time information), or 'street' (place information), and may determine a music equalizer preset 820 mapped to correspond to 'music'.

The electronic device 100 may control the microphone 122 of FIG. 6 to obtain the audio signal by using the determined music equalizer preset 820.

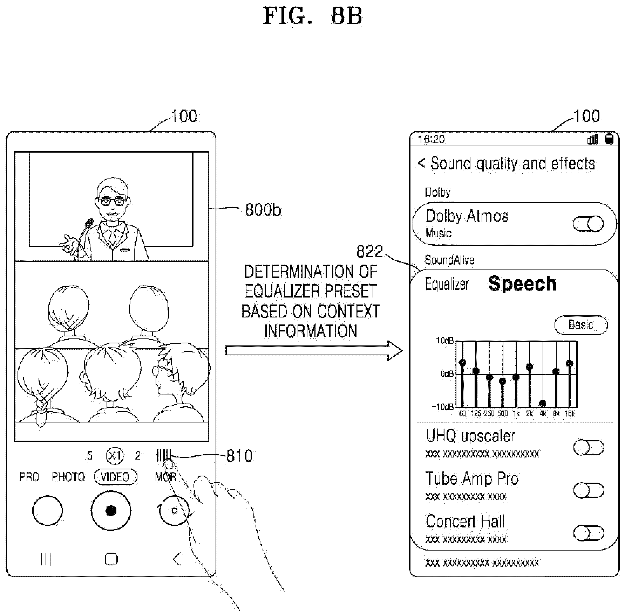

FIG. 8B is a diagram illustrating an operation, performed by the electronic device 100 according to an embodiment of the present disclosure, of determining an equalizer preset, based on context information.

The embodiment illustrated in FIG. 8B is identical to FIG. 8A except for an object-of-interest image 800b, context information obtained from the object-of-interest image 800b, and an equalizer preset 822, therefore, redundant descriptions are omitted.

Referring to FIG. 8B, the electronic device 100 may obtain at least one piece of information among a 'lecturer' (classification information) and a 'lecturing action' (action information) from the object-of-interest image 800b. The electronic device 100 may display a smart audio setting UI 810 for executing an operation and/or function of controlling audio settings, based on the context information, and may receive a user's touch input of selecting the smart audio setting UI 810. In response to the touch input being received, the electronic device 100 determines an equalizer preset of the audio device, based on the context information.

The electronic device 100 may determine a scene context, based on action information among the context information of the object of interest, and may determine an equalizer preset 822 mapped to the scene context. In the embodiment illustrated in FIG. 8B, the electronic device 100 may determine the scene context, based on action information (e.g., a 'lecture') among the context information, and may determine a 'speech' equalizer preset 822 mapped to correspond to the scene context from among a plurality of equalizer presets according to a preset mapping relationship.

The electronic device 100 may control the microphone 122 of FIG. 6 to obtain the audio signal by using the determined 'speech' equalizer preset 822.

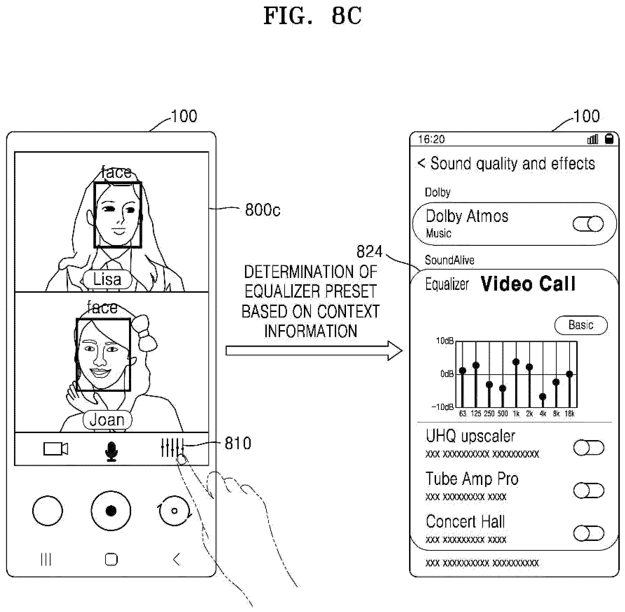

FIG. 8C is a diagram illustrating an operation, performed by the electronic device 100 according to an embodiment of the present disclosure, of determining an equalizer preset, based on context information.

The embodiment illustrated in FIG. 8C is identical to FIG. 8A except for an object-of-interest image 800c, context information obtained from the object-of-interest image 800c, and an equalizer preset 824, therefore, redundant descriptions are omitted.

Referring to FIG. 8C, the electronic device 100 may obtain at least one piece of information among a 'human face' (classification information) and a 'video call' (action information) from the object-of-interest image 800c. The electronic device 100 may display the smart audio setting UI 810 for executing an operation and/or function of controlling audio settings, based on the context information, and may receive a user's touch input of selecting the smart audio setting UI 810. In response to the touch input being received, the electronic device 100 determines an equalizer preset of the audio device, based on the context information.

The electronic device 100 may determine a scene context, based on action information among the context information of the object of interest, and may determine an equalizer preset 824 mapped to the scene context. In the embodiment illustrated in FIG. 8C, the electronic device 100 may determine the scene context, based on an action context (e.g., a 'video call'), and may determine a video call equalizer preset 824 mapped to correspond to the scene context from among a plurality of equalizer presets according to a preset mapping relationship.

The electronic device 100 may control the microphone 122 of FIG. 6 to obtain the audio signal by using the determined video call equalizer preset 824.

In the embodiments illustrated in FIGS. 6, 7A, 7B, and 8A-8C, the electronic device 100 may obtain context information from an image of an object of interest, and may determine an equalizer preset corresponding to the context information of the object of interest, based on a preset mapping relationship between the context information and the equalizer preset. The electronic device 100 according to an embodiment of the present disclosure may obtain an audio signal through the determined equalizer preset, thereby boosting only a frequency band of an audio signal associated with a context of an object in which a user is interested, and improving the quality of the audio signal recorded through the microphone 122. For example, in the embodiment illustrated in FIG. 8A, the electronic device 100 may boost and record only a song or music of a street singer without any surrounding noise, or only song or music of stage artist. Although not shown in the drawings, the electronic device 100 may boost (or amplify) a specific frequency band related to the object of interest among the frequency band of the audio signal output through the speaker 124 (see FIG. 2) included in the audio device by using the determined equalizer preset, and may attenuate or remove a frequency band not related to the object of interest. To this end, the electronic device 100 may improve the quality of the audio signal output through the speaker 124.

FIG. 9 is a diagram illustrating an operation, performed by the electronic device 100 according to an embodiment of the present disclosure, of performing filtering with respect to an audio signal, based on context information of an image.

Referring to FIG. 9, the electronic device 100 may include the camera 110, the audio device 120, and the processor 130. However, only essential components for explaining the operation of the electronic device 100 are illustrated in FIG. 9, and the electronic device 100 is not limited to including only the configuration illustrated in FIG. 9.

The electronic device 100 may obtain a raw image 900 by photographing an object in a real space by using the camera 110. The camera 110 may provide an image frame of the obtained raw image 900 to the processor 130. The processor 130 may detect one or more objects 910, 920, and 922 from the image frame by using an object detection model, and may identify an object of interest 910 from among the detected one or more objects 910, 920, and 922. According to an embodiment of the present disclosure, the electronic device 100 may perform, based on a user input, at least one of zoom-in, panning, or focusing and may identify the object of interest 910 included within a region of interest specified by the performed zoom-in, panning, or focusing. In the embodiment illustrated in FIG. 9, the processor 130 may identify a 'person' as the object of interest 910 from the image frame.

The processor 130 may obtain context information from the image frame of the raw image 600 obtained by the camera 110, by inputting the image frame to the image processor 132. According to an embodiment of the present disclosure, the image processor 132 may be implemented as an artificial intelligence model. For example, the image processor 132 may be implemented as, for example, a convolutional neural network, but the present disclosure is not limited thereto. The image processor 132 may also be implemented as, for example, a region-based convolutional neural network (R-CNN), a single shot multibox detector (SSD) model, YOLO v4, a CenterNet, or a MobileNet. The image processor 132 may obtain the context information from the object of interest. According to an embodiment of the present disclosure, the image processor 132 may obtain context information including at least one of classification information, action information, time information, location information, place information, and surrounding environment information of the object of interest. In the embodiment illustrated in FIG. 9, the processor 130 may obtain information of 'singer (classification information)', 'street (place information)', or 'evening time (time information)' as the context information of the object of interest 910 through the image processor 132.

The processor 130 may obtain a video stream 930 regarding the object of interest including the object of interest 910 through the image processor 132.

The processor 130 may control the audio settings of the audio device 120, based on the context information obtained by the image processor 132. The audio device 120 may include, for example, a microphone, and may record voice, music, or noise output by the one or more objects 910, 920, and 922 through the microphone. According to an embodiment of the present disclosure, the audio device 120 may obtain a voice signal 912 and a music signal 914 output by the object of interest 910, and may obtain a noise signal 924 output by a car 920 and a pedestrian 922.

According to an embodiment of the present disclosure, the audio device 120 may include a band stop filter 126 and an amplifier 128. The processor 130 may control the band stop filter 126 and the amplifier 128 of the audio device 120, based on the context information. According to an embodiment of the present disclosure, the processor 130 may control the band stop filter 126 to perform filtering to attenuate or cut off a frequency band of the noise signal 924 output by the remaining objects 920 and 922 except for the object of interest 910 from among the one or more objects 910, 920, and 922 detected from the image frame of the raw image 900. According to an embodiment of the present disclosure, the processor 130 may amplify the frequency bands of the voice signal 912 and the music signal 914 output by the object of interest 910 by using the amplifier 128.

The audio device 120 may obtain an audio signal 940 by amplifying only the voice signal 912 and the music signal 914 related to the object of interest 910 under a control by the processor 130 and attenuating or removing the noise signal 924 related to the remaining objects 920 and 922 other than the object of interest 910. In the embodiment illustrated in FIG. 9, the audio signal 940 may include the voice signal 912 and the music signal 914 output by the object of interest 910.

In the embodiment illustrated in FIG. 9, the electronic device 100 may obtain the context information related to the object of interest 910, and may control the band stop filter 126 and the amplifier 128 of the audio device 120, based on the context information, to boost (or amplify) and obtain only the audio signal 940 related to an object of interest to the user. Therefore, the electronic device 100 according to one embodiment of the present disclosure may obtain only the audio signal 940 desired by the user through the microphone, and efficiently attenuate the noise signal 924 that the user does not want, thereby providing a technical effect of improving the quality of the recorded audio signal 940.

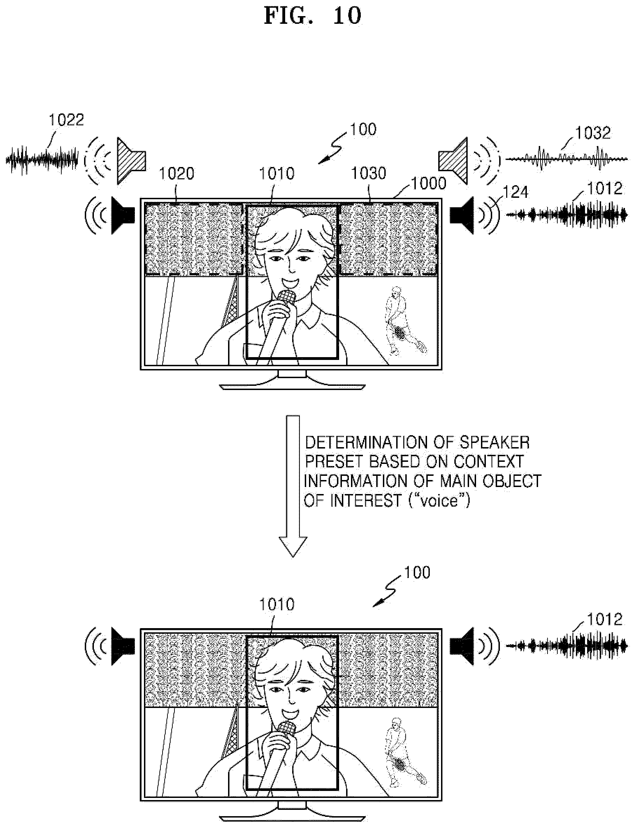

FIG. 10 is a diagram illustrating an operation, performed by the electronic device 100 according to an embodiment of the present disclosure, of determining a preset of an audio device, based on context information of an object of interest 1010.

Referring to FIG. 10, the electronic device 100 may include a display, and the display may display an image 1000. For example, the electronic device 100 may be a smart TV. According to an embodiment of the present disclosure, the electronic device 100 may obtain gaze information of a user and detect a point of interest where the user's gaze remains for a preset period of time. The processor 100 (see FIG. 2) of the electronic device 100 may detect one or more objects 1010, 1020, and 1030 from the displayed image 1000, and may identify, as the object of interest 1010, an object located at the point of interest from among the one or more objects 1010, 1020, and 1030.

The processor 130 may obtain context information of the object of interest 1010. According to an embodiment of the present disclosure, the processor 140 may obtain information about at least one of classification, action, time, location, place, and surrounding environment of the object of interest 1010 by using the context information obtainment module 146 (see FIG. 2) of the memory 140 (see FIG. 2). According to an embodiment of the present disclosure, the context information obtainment module 146 may be implemented as an artificial intelligence model. For example, the context information obtainment module 146 may be implemented as a convolutional neural network, but the present disclosure is not limited thereto. The context information obtainment module 146 may also be implemented as, for example, a region-based convolutional neural network (R-CNN), a single shot multibox detector (SSD) model, YOLO v4, a CenterNet, or a MobileNet. In the embodiment illustrated in FIG. 10, the processor 130 may obtain context information including information of 'tennis player' (classification information), 'interview' (action information), 'tennis court' (location information), or 'audience' (environmental information) as from the context information of the object of interest 1010, through the context information obtainment module 146.

The processor 130 may determine a preset of the speaker 124, based on the context information of the object of interest 1010. In the embodiment illustrated in FIG. 10, the context information of the object of interest 1010 indicates that a 'tennis player' is being 'interviewed' on a 'tennis court', so the processor 130 may determine the preset of the speaker 124 to be "voice".

In a case that the preset of the speaker 124 is determined to be "voice", the processor 130 may amplify an audio signal 1012 having a frequency band related to the object of interest 1010 from among the frequency bands of audio signals 1012, 1022, and 1032, by using the amplifier of the speaker 124. For example, the processor 130 may identify a frequency band corresponding to voice output by the object of interest 1010, by using information about the frequency band of an audio signal for each object, and may amplify only the audio signal 1012 corresponding to the identified frequency band. As another example, the processor 130 may amplify only the audio signal 1012 related to the voice of the object of interest 1010 by using an audio-visual speech separation algorithm implemented as an artificial intelligence model or by using a pixel-by-pixel audio signal separation algorithm (e.g., a PixelPlayer of The Sound of Pixel).

The processor 130 may attenuate or mute the audio signals 1022 and 1032 in remaining frequency bands other than the frequency band related to the object of interest 1010. According to an embodiment of the present disclosure, the processor 130 may perform filtering to attenuate or cut off the frequency bands of the audio signals 1022 and 1032 related to the remaining objects 1020 and 1030 except for the object of interest 1010, by using a band stop filter.

In the embodiment illustrated in FIG. 10, the electronic device 100 obtains context information about the object of interest 1010 from the image 1000 and controls the audio settings of the speaker 124, based on the context information, to boost only the audio signal 1012 (e.g., interview voice of a tennis player) related to an object of interest to a user, thereby providing a technical effect of improving the quality of an audio signal output through the speaker 124. In addition, the electronic device 100 according to an embodiment of the present disclosure may attenuate or mute noise signals 1022 and 1032 interfering with hearing the audio signal 1012 of the object of interest 1010, for example, cheers from audiences, thereby improving usage convenience and satisfaction.

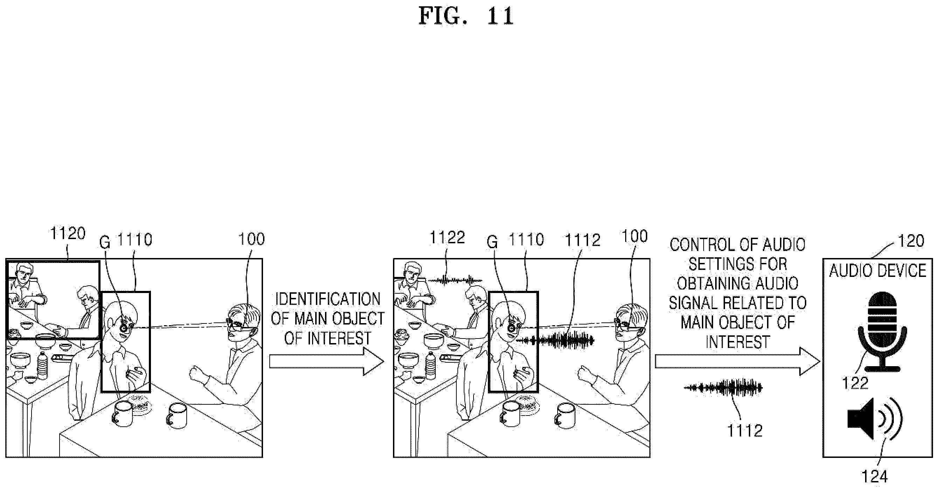

FIG. 11 is a diagram illustrating an operation, performed by the electronic device 100 according to an embodiment of the present disclosure, of controlling audio settings in order to obtain an audio signal 1112 related to an object of interest 1110.

Referring to FIG. 11, the electronic device 100 may be a glasses-type augmented reality device worn on a user's face. For example, the electronic device 100 may be an augmented reality device such as smart glasses. According to an embodiment of the present disclosure, the electronic device 100 may include an eye tracking sensor that tracks the gazes of the user's left and right eyes to obtain information about gaze directions of the user's left and right eyes. The electronic device 100 may obtain information about the gaze direction of the left eye and information about the gaze direction of the right eye by using the gaze tracking sensor. The processor 130 (see FIG. 2) of the electronic device 100 may obtain location information of a gaze point G where the gaze direction of the left eye and the gaze direction of the right eye converge through a gaze tracking sensor. The processor 130 may identify the object of interest 1110. based on a location of the gaze point G.

The processor 130 may control the audio settings of the audio device 120 to obtain the audio signal 1112 related to the object of interest 1110. According to an embodiment of the present disclosure, the processor 130 may amplify the audio signal 1112 having a frequency band related to the object of interest 1110 from among the frequency bands of audio signals 1112 and 1122, by using the amplifier of the microphone 122.

According to an embodiment of the present disclosure, the processor 130 may attenuate or mute the audio signal 1122 in a remaining frequency band other than the frequency band related to the object of interest 1110. According to an embodiment of the present disclosure, the processor 130 may perform filtering to attenuate or cut off the frequency band of the audio signal 1122 related to a remaining object 1120 except for the object of interest 1110, by using a band stop filter.

According to an embodiment of the present disclosure, the microphone 122 may be configured as a directional microphone or a multi-pattern microphone. The processor 130 may control the microphone 122 to obtain the audio signal 1112 only within a predetermined angular range corresponding to the location of the object of interest 1110.

According to an embodiment of the present disclosure, the processor 130 may output, through the speaker 124, the audio signal 1112 obtained through the microphone 122.

In the embodiment illustrated in FIG. 11, because the electronic device 100 amplifies and records only a speech (audio signal 1112) of a person (object of interest 1110) who is conversing with the user among people around the user, and outputs the recorded speech through the speaker 124, thereby providing a technical effect of allowing the user to listen more intently to the speech of the person with whom the user is conversing. In addition, in a case that the user has a hearing impairment, the electronic device 100 may provide a hearing aid-like function to the hearing impaired person by amplifying the speech of the person (object of interest 1110) in conversation with the user and attenuating or cutting off the sounds of the object 1120 not related to the person in conversation with the user.

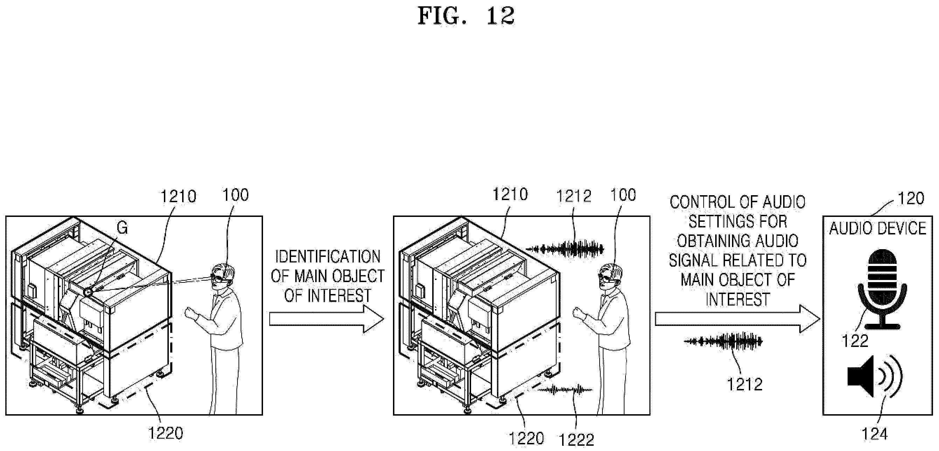

FIG. 12 is a diagram illustrating an operation, performed by the electronic device 100 according to an embodiment of the present disclosure, of controlling audio settings in order to obtain an audio signal 1212 related to an object of interest 1210.

Referring to FIG. 12, the electronic device 100 may be a glasses-type augmented reality device worn on a user's face. For example, the electronic device 100 may be an augmented reality device such as smart glasses. According to an embodiment of the present disclosure, the processor 130 (see FIG. 2) of the electronic device 100 may obtain location information of a gaze point G where a gaze direction of a user's left eye and a gaze direction of the user's right eye converge through a gaze tracking sensor. An embodiment, performed by the processor 130, of obtaining location information of the gaze point G is the same as that described above with reference to FIG. 11, and thus a redundant description thereof will be omitted. The processor 130 may identify the object of interest 1210. based on a location of the gaze point G.

The processor 130 may control the audio settings of the audio device 120 to obtain the audio signal 1212 related to the object of interest 1210. According to an embodiment of the present disclosure, the processor 130 may amplify the audio signal 1212 having a frequency band related to the object of interest 1210 from among the frequency bands of audio signals 1212 and 1222, by using the amplifier of the microphone 122.

According to an embodiment of the present disclosure, the processor 130 may attenuate or mute the audio signal 1222 in a remaining frequency band other than the frequency band related to the object of interest 1210. According to an embodiment of the present disclosure, the processor 130 may perform filtering to attenuate or cut off the frequency band of the audio signal 1222 related to a remaining object 1220 except for the object of interest 1210, by using a band stop filter.

According to an embodiment of the present disclosure, the microphone 122 may be configured as a directional microphone or a multi-pattern microphone. The processor 130 may control the microphone 122 to obtain the audio signal 1212 only within a predetermined angular range corresponding to the location of the object of interest 1210.

According to an embodiment of the present disclosure, the processor 130 may output, through the speaker 124, the audio signal 1212 obtained through the microphone 122.

In the embodiment illustrated in FIG. 12, because the electronic device 100 amplifies and records only machine sound (audio signal 1212) output by a machine (object of interest 1210) used by a worker, and outputs the recorded machine sound through the speaker 124, thereby providing a technical effect of improving the worker's concentration and work efficiency.

FIG. 13 is a flowchart of an operation, performed by the electronic device 100 according to an embodiment of the present disclosure, of identifying an object of interest from a cropped image and obtaining an audio signal associated with the object of interest.

Operations S1310 and S1320 of FIG. 13 are detailed operations of operation S320 of FIG. 3. Operation S1310 of FIG. 13 may be performed after operation S310 of FIG. 3 is performed. Operation S1330 of FIG. 13 is a detailed version of operation S340 of FIG. 3.

FIG. 14 is a diagram illustrating an operation, performed by the electronic device 100 according to an embodiment of the present disclosure, of identifying an object of interest 1440 from a cropped image 1430 and obtaining an audio signal 1412 associated with the object of interest 1440.

An operation of the electronic device 100 will now be described in detail with reference to FIGS. 13 and 14.

Referring to FIG. 13, in operation S1310, the electronic device 100 obtains a cropped image, based on a user's crop input. Referring to FIGS. 13 and 14, the electronic device 100 may include the display and the input interface. The electronic device 100 may display an image 1400 on the display. The processor 130 (see FIG. 2) of the electronic device 100 may detect one or more objects 1410 and 1420 from the displayed image 1400. The electronic device 100 may receive the user's crop input of cropping a specific area of the image 1400 through the input interface. The processor 130 may obtain the cropped image 1430, based on the crop input. In the embodiment illustrated in FIG. 14, the processor 130 may detect a first object 1410, which is a talking person, and a second object 1420, which is a cat, from the image 1400, and may obtain the cropped image 1430 including only the first object 1410 according to the crop input received from the user.

Referring to operation S1320 of FIG. 13, the electronic device 100 identifies an object of interest included in a cropped image. Referring to FIGS. 13 and 14, the processor 130 of the electronic device 100 may identify the first object 1410 included in the cropped image 1430 as an object of interest.

Referring to operation S1330 of FIG. 13, the electronic device 100 amplifies an audio signal related to the object of interest, and attenuates or mutes an audio signal related to an object not included in the cropped image from among the at least one object. Referring to FIGS. 13 and 14, the processor 130 of the electronic device 100 may control the amplifier of the audio device 120 to amplify the audio signal 1412 related to the object of interest 1410 included in the cropped image 1430. For example, the processor 130 may identify a frequency band corresponding to voice output by the object of interest 1410, by using information about the frequency band of an audio signal for each object, and may amplify only the audio signal 1412 corresponding to the identified frequency band. As another example, the processor 130 may amplify only the audio signal 1412 related to the voice of the object of interest 1410 by using an audio-visual speech separation algorithm implemented as an artificial intelligence model or by using a pixel-by-pixel audio signal separation algorithm (e.g., a PixelPlayer of The Sound of Pixel). The processor 130 may obtain the amplified audio signal 1412 through the microphone 122.

According to an embodiment of the present disclosure, the processor 130 may attenuate or mute an audio signal 1422 in a remaining frequency band other than the frequency band related to the object of interest 1410. For example, the processor 130 may perform filtering to attenuate or cut off the frequency bands of the audio signal 1422 related to the remaining object 1420 except for the object of interest 1410, by using a band stop filter.

In the embodiment illustrated in FIGS. 13 and 14, the electronic device 100 may amplify and obtain only the audio signal 1412 related to the object of interest 1410 included in the cropped image 1430 cropped by the user. Accordingly, the electronic device 100 according to an embodiment of the present disclosure may obtain an audio signal conforming to the user's preference by attenuating or cutting off cat sound (audio signal 1422), which is noises not desired by the user, and user convenience may be improved.

The present disclosure provides the electronic device 100 for controlling the audio device, based on an image. The electronic device 100 according to an embodiment of the present disclosure may include the audio device 120 of FIG. 2 including at least one of the camera 110 of FIG. 2, the microphone 122 of FIG. 2, and the speaker 124 of FIG. 2, the memory 140 of FIG. 2 storing one or more instructions, and at least one processor 130 of FIG. 2 executing the one or more instructions. The at least one processor 130 may detect at least one object from an image captured using the camera 110. The at least one processor 130 may identify a main object of interest to the user, from among the detected at least one object. The at least one processor 130 may obtain context information of the identified main object of interest. The at least one processor 130 may control the audio settings of the audio device 120 for obtaining or outputting an audio signal by using the audio device 120, based on the obtained context information.

According to an embodiment of the present disclosure, the electronic device 100 may further include an input interface for receiving a user input of one of zoom-in, panning, focus, or crop with respect to the image. The at least one processor 130 may identify an area zoomed-in, panned, focused, or cropped based on the user input received through the input interface. The at least one processor 130 may detect an object included in the identified area as the main object of interest.

According to an embodiment of the present disclosure, the image processor 130 may obtain at least one of classification information, action information, time information, location information, place information, and surrounding environment information of the main object of interest from the image of the main object of interest.

According to an embodiment of the present disclosure, the at least one processor 130 may control at least one of a filter, an amplifier, and an equalizer of the audio device 120, based on the context information.

According to an embodiment of the present disclosure, the at least one processor 130 may determine an equalizer preset mapped to the context information from among a plurality of pre-stored equalizer presets, based on a decision tree or fuzzy logic.

According to an embodiment of the present disclosure, the at least one processor 130 may determine the equalizer preset mapped to correspond to the context information according to a preset mapping relationship.

According to an embodiment of the present disclosure, the at least one processor 130 may detect an action of the main object of interest from the image of the main object of interest. The at least one processor 130 may determine an equalizer preset mapped to the action of the main object of interest detected according to a preset mapping relationship.

According to an embodiment of the present disclosure, the at least one processor 130 may amplify a frequency band related to the main object of interest among the frequency band of the audio signal, by using the amplifier.

According to an embodiment of the present disclosure, the at least one processor 130 may perform filtering to attenuate or cut off a frequency band of an audio signal related to a remaining object except for the main object of interest from among the at least one object, by using a band stop filter.

According to an embodiment of the present disclosure, the electronic device 100 may further include an input interface configured to receive a crop input of a user for cropping the image. The at least one processor 130 may obtain a cropped image, based on the crop input received through the input interface. The at least one processor 130 may amplify an audio signal related to the main object of interest included in the cropped image, and may attenuate or mute an audio signal related to an object not included in the cropped image from among the at least one object.

The present disclosure provides a method, performed by the electronic device 100, of controlling the audio device 120, based on the image. The method according to an embodiment of the present disclosure may include an operation S310 of detecting at least one object from an image captured using the camera 110. The method according to an embodiment of the present disclosure may include an operation S320 of identifying a main object of interest to a user, from among the detected at least one object. The method according to an embodiment of the present disclosure may include an operation S330 of obtaining context information of the identified main object of interest. The method according to an embodiment of the present disclosure may include an operation S340 of controlling audio settings of the audio device 120 for obtaining or outputting an audio signal, the audio device 120 including at least one of a microphone and a speaker, based on the obtained context information.

According to an embodiment of the present disclosure, in the operation S330 of obtaining the context information, at least one of classification information, action information, time information, location information, place information, and surrounding environment information of the main object of interest may be obtained from an image of the main object of interest.

According to an embodiment of the present disclosure, in the operation S340 of controlling the audio settings of the audio device 120, at least one of a filter, an amplifier, and an equalizer of the audio device 120 may be controlled based on the context information.

According to an embodiment of the present disclosure, the operation S340 of controlling the audio settings of the audio device 120 may include determining an equalizer preset mapped to the context information from among a plurality of pre-stored equalizer presets, based on a decision tree or fuzzy logic.

According to an embodiment of the present disclosure, the operation S340 of controlling the audio settings of the audio device 120 may include determining an equalizer preset mapped to correspond to the context information according to a preset mapping relationship.

According to an embodiment of the present disclosure, in the operation S330 of obtaining the context information, an action of the main object of interest may be detected from the image of the main object of interest. In an operation of selecting the equalizer preset, an equalizer preset mapped to the action of the main object of interest detected according to a preset mapping relationship may be determined.

According to an embodiment of the present disclosure, the operation S340 of controlling the audio settings of the audio device 120 may include amplifying a frequency band related to the main object of interest among the frequency band of the audio signal, by using the amplifier.

According to an embodiment of the present disclosure, the operation S340 of controlling the audio settings of the audio device 120 may include performing filtering to attenuate or cut off a frequency band of an audio signal related to a remaining object except for the main object of interest from among the at least one object, by using a band stop filter.

According to an embodiment of the present disclosure, the operation S320 of identifying the main object of interest may include operation S1310 of obtaining a cropped image, based on a crop input of the user for cropping the image, According to an embodiment of the present disclosure, the operation S340 of controlling the audio settings of the audio device 120 may include operation S1330 of amplifying an audio signal related to the main object of interest included in the cropped image, and attenuating or muting an audio signal related to an object not included in the cropped image from among the at least one object.

The present disclosure provides a computer program product including a computer-readable storage medium. According to an embodiment of the present disclosure, the storage medium may include instructions readable by the electronic device 100 in order for the electronic device 100 to perform operation S310 of detecting at least one object from an image captured using the camera 110, operation S320 of identifying a main object of interest to a user, from among the detected at least one object, operation S330 of obtaining context information of the identified main object of interest, and operation S340 of controlling audio settings of the audio device 120 for obtaining or outputting an audio signal, the audio device 120 including at least one of a microphone and a speaker, based on the obtained context information.

The program executed by the electronic device 100 described above in the present disclosure may be implemented as a hardware component, a software component, and/or a combination of hardware components and software components. The program may be executed by any system capable of executing computer readable instructions.

The software may include a computer program, a code, instructions, or a combination of one or more of the foregoing, and may constitute a processing device so that the processing device can operate as desired, or may independently or collectively instruction the processing device.

The software may be implemented as a computer program including instructions stored in computer-readable storage media. Examples of the computer-readable recording media include magnetic storage media (e.g., ROM, floppy disks, hard disks, etc.), and optical recording media (e.g., CD-ROMs, or digital versatile discs (DVDs)). The computer-readable recording media can be distributed over network coupled computer systems so that the computer-readable code is stored and executed in a distributive manner. These media can be read by the computer, stored in a memory, and executed by a processor.

Computer-readable storage media may be provided in the form of non-transitory storage media. Here, 'non-transitory' means that the storage medium does not include a signal and is tangible, but does not distinguish whether data is stored semi-permanently or temporarily in the storage medium. For example, the non-transitory recording medium may include a buffer in which data is temporarily stored.

Programs according to various embodiments disclosed herein may be provided by being included in computer program products. The computer program product, which is a commodity, may be traded between sellers and buyers.

Computer program products may include a software program and a computer-readable storage medium having the software program stored thereon. For example, computer program products may include a product in the form of a software program (e.g., a downloadable application) that is electronically distributed through manufacturers of the electronic device 100 or electronic markets (e.g., Samsung Galaxy Store). For electronic distribution, at least a portion of the software program may be stored on a storage medium or may be created temporarily. In this case, the storage medium may be a server of a manufacturer of the electronic device 100, a server of an electronic market, or a storage medium of a relay server for temporarily storing a software program.

The computer program product may include a storage medium of the server or a storage medium of the electronic device 100, in a system composed of the electronic device 100 and/or the server. Alternatively, if there is a third device (e.g., a mobile device) in communication with the electronic device 100, the computer program product may include a storage medium of the third device. Alternatively, the computer program product may include the software program itself transmitted from the electronic device 100 to the third device, or transmitted from the third device to the electronic device 100.

In this case, one of the electronic device 100 and the third device may execute the computer program product to perform the methods according to the disclosed embodiments. Alternatively, at least two of the electronic device 100 and the third device may execute the computer program product to distribute and perform the methods according to the disclosed embodiments.

For example, the electronic device 100 may control another electronic device (e.g., a mobile device) in communication with the electronic device 100 to perform the methods according to the disclosed embodiments, by executing the computer program product stored in the memory 140 of FIG. 2.

As another example, a third device may execute a computer program product to control an electronic device in communication with the third device to perform the methods according to the disclosed embodiments.

When the third device executes the computer program product, the third device may download the computer program product from the electronic device 100 and execute the downloaded computer program product. Alternatively, the third device may execute a computer program product provided in a preloaded state to perform methods according to the disclosed embodiments.

While the disclosure has been particularly shown and described with reference to examples thereof, it will be understood by those of ordinary skill in the art that various changes in form and details may be made therein without departing from the spirit and scope of the disclosure as defined by the following claims. For example, an appropriate result may be attained even when the above-described techniques are performed in a different order from the above-described method, and/or components, such as the above-described computer system or module, are coupled or combined in a different form from the above-described methods or substituted for or replaced by other components or equivalents thereof.

## Claims

1. A method for controlling an audio device, based on an image, the method comprising:
a camera (110);
an audio device (120) including at least one of a microphone (122) and a speaker (124);
memory (140) storing one or more instructions; and
at least one processor (130) configured to execute the one or more instructions,
wherein the at least one processor (130) is configured to execute the one or more instructions to:
detect at least one object from an image captured using the camera (110);
identify a main object of interest to a user, from among the detected at least one object;
obtain context information of the identified main object of interest; and
control audio settings of the audio device (120) for obtaining or outputting an audio signal by using the audio device (120), based on the obtained context information.

2. The electronic device (100) of claim 1, wherein
the at least one processor (130) is further configured to control at least one of a filter, an amplifier, and an equalizer of the audio device (120), based on the context information.

3. The electronic device (100) of claim 1 or 2, wherein
the at least one processor (130) is further configured to determine an equalizer preset mapped to the context information from among a plurality of pre-stored equalizer presets, based on a decision tree or fuzzy logic.

4. The electronic device (100) of one of claims 1 through 3, wherein
the at least one processor (130) is further configured to determine the equalizer preset mapped to correspond to the context information according to a preset mapping relationship.

5. The electronic device (100) of one of claims 1 through 4, wherein
the at least one processor (130) is further configured to amplify a frequency band related to the main object of interest from among a frequency band of the audio signal, by using the amplifier.

6. The electronic device (100) of one of claims 1 through 5, wherein
the at least one processor (130) is further configured to perform filtering to attenuate or cut off a frequency band of the audio signal related to a remaining object except for the main object of interest from among the at least one object, by using a band stop filter.

7. The electronic device (100) of one of claims 1 through 6, further comprising
an input interface configured to receive a crop input of the user for cropping the image,
wherein the at least one processor 130 is further configured to
obtain a cropped image, based on the crop input received through the input interface,
amplify an audio signal related to the main object of interest included in the cropped image, and attenuate or mute an audio signal related to an object not included in the cropped image from among the at least one object.

8. A method, performed by an electronic device (100), of controlling an audio device (120) based on an image, the method comprising:
detecting at least one object from an image captured using a camera (110) (operation S310);
identifying a main object of interest to a user is interested, from among the detected at least one object (operation S320);
obtaining context information of the identified main object of interest (operation S330); and
controlling audio settings of the audio device (120) for obtaining or outputting an audio signal, the audio device (120) including at least one of a microphone and a speaker, based on the obtained context information (operation S340).

9. The method of claim 8, wherein
the controlling of the audio settings of the audio device (120) (operation S340) comprises
controlling at least one of a filter, an amplifier, and an equalizer of the audio device (120), based on the context information.

10. The method of claim 8 or 9, wherein
the controlling of the audio settings of the audio device (120) (operation S340) comprises
determining an equalizer preset mapped to the context information from among a plurality of pre-stored equalizer presets, based on a decision tree or fuzzy logic.

11. The method of one of claims 8 through 10, wherein
the controlling of the audio settings of the audio device (120) (operation S340) comprises
determining the equalizer preset mapped to correspond to the context information according to a preset mapping relationship.

12. The method of one of claims 8 through 11, wherein
the controlling of the audio settings of the audio device (120) (operation S340) comprises
amplifying a frequency band related to the main object of interest from among a frequency band of the audio signal, by using the amplifier.

13. The method of one of claims 8 through 12, wherein
the controlling of the audio settings of the audio device (120) (operation S340) comprises
performing filtering to attenuate or cut off a frequency band of the audio signal related to a remaining object except for the main object of interest from among the at least one object, by using a band stop filter.

14. The method of one of claims 8 through 13, wherein
the identifying of the main object of interest (operation S320) comprises
obtaining a cropped image, based on a crop input of the user for cropping the image (operation S1310),
the controlling of the audio settings of the audio device (120) (operation S340) comprises
amplifying an audio signal related to the main object of interest included in the cropped image, and attenuating or muting an audio signal related to an object not included in the cropped image from among the at least one object.

15. A computer program product including a computer-readable storage medium,
the storage medium including instructions related to a method, performed by an electronic device (100), of controlling an audio device (120), based on an image, the method comprising:
detecting at least one object from an image captured using a camera (110);
identifying a main object of interest to a user, from among the detected at least one object;
obtaining context information of the identified main object of interest; and
controlling audio settings of the audio device (120) for obtaining or outputting an audio signal, the audio device (120) including at least one of a microphone and a speaker, based on the obtained context information.
